# EUROPEAN PATENT SPECIFICATION

(11) **EP 4 159 319 B1**
(45) Date of publication and mention of the grant of the patent: **28.10.2026**
(21) Application number: 21199786.1
(22) Date of filing: 29.09.2021
(51) Int. Cl.: B04B 1/08, B04B 7/14

(54) **A CENTRIFUGAL SEPARATOR**
ZENTRIFUGALABSCHEIDER
SÉPARATEUR CENTRIFUGE

(43) Date of publication of application: 05.04.2023
(73) Proprietor: Alfa Laval Corporate AB, 221 00 Lund (SE)
(72) Inventor: NILSSON, Sven-Åke, SE-646 91 GNESTA (SE)
(74) Representative: Alfa Laval Attorneys

(56) References cited:
- EP-A1- 3 315 205
- DE-A1- 102013 101 654
- GB-A- 299 703

## Description

### Field of the Invention

The present invention relates to the field of centrifugal separators, and more a centrifugal separator for separating at least one liquid phase and a solids phase from a liquid feed mixture.

### Background of the Invention

Centrifugal separators are generally used for separation of liquids and/or for separation of solids from a liquid. During operation, liquid mixture to be separated is introduced into a rotating bowl and heavy particles or denser liquid, usually water, accumulates at the periphery of the rotating bowl whereas less dense liquid accumulates closer to the central axis of rotation. This allows for collection of the separated fractions, e.g. by means of different outlets arranged at the periphery and close to the rotational axis, respectively. Separation members, such as a stack of frustoconical separation discs, are usually used within the rotating bowl in order to enhance the separation performance. An example of a centrifugal separator is described in patent application EP 3315205. Another example is known from DE102013101654A1.

In certain applications, the hygienic condition within the centrifugal separator is of high importance. Such applications include separation of dairy products, beer and in biotechnology applications. For such applications, so called hermetic separators have been developed and in production for a number of years.

However, processing a feed liquid in large centrifugal separators having a high number of separation discs spaced small distances apart (such a spaced less than 1 mm apart or less) inevitably leads to dirt etc adhering to the surfaces of the separation discs. Thus, cleaning - such as cleaning-in-place (CIP) - of the separation discs may be necessary from time to time. This of course stops production and may require specific cleaning procedures which may be complex and time consuming.

Thus, there is a need in the art for improved centrifugal separators which decreases the risk of dirt adhering to the separation discs and thus increases the time between cleaning of the separation discs.

### Summary of the Invention

It is an object of the invention to at least partly overcome one or more limitations of the prior art. In particular, it is an object to provide a centrifugal separator having improved hygienic abilities when separating at least one liquid phase from a liquid feed mixture.

As a first aspect of the invention, there is provided a centrifugal separator for separating at least one liquid phase from a liquid feed mixture, comprising
a frame, a drive member and a rotating part,
wherein the drive member is configured to rotate the rotating part in relation to the frame around an axis of rotation (X), and
wherein the rotating part comprises a centrifuge bowl enclosing a separation space;
wherein the centrifuge bowl further comprises an inlet for receiving the liquid feed mixture, at least one liquid outlet for a separated liquid phase;
wherein the separation space comprises a stack of separation discs arranged coaxially around the axis of rotation (X);
wherein said separation discs comprise distance members arranged so that interspaces are formed between adjacent separation discs in the disc stack, and further wherein
a plurality of said separation discs comprise a throttle member other than said distance members and arranged to cause a decrease in pressure to a liquid flowing through the disc stack in said interspaces.

The first aspect of the invention is based on the insight that throttle members arranged to cause a decrease in pressure to the liquid flowing between the separation discs gives rise to a less dirt sticking onto the separation surfaces of the separation discs. This is thought to be due to the throttle members aid in distributing the flow of liquid mixture between the small interspaces between the discs, i.e. giving rise to an even flow distribution within the stack of separation discs such that as large are as possible on the separation surfaces of the disc is covered with liquid during operation. Each of the plurality of discs may thus comprise an individual throttle member. In embodiments, all of the separation discs in the disc stack comprise a throttle member which is other than the distance members and arranged to cause a decrease in pressure to a liquid flowing through the disc stack in said interspaces.

In embodiments, at least 25%, such as at least 50%, such as at least 75%, such as at least 90%, such as all of the separation discs of the disc stack comprises a throttle member according to the present invention.

In general, the height (or size of the interspaces) are dimensioned somewhere in the range of 0.2 to 0.8 mm, whereas the separation discs of the disc stack are made as thin as possible to maximize the number of separation discs within said given total stack height. A typical thickness of a separation disc may be in the range of 0.3 - 0.6 mm. However, a high performing disc stack depends, among other things, on the interspaces being equidistant, which facilitates the liquid mixture being evenly distributed in the interspaces of the stack. During compression of the disc stack at mounting, there is a risk that the interspaces are not equidistant within the stack, which may thus lead to an uneven flow distribution, that in turn may cause a decrease in the separating efficiency of the disc stack and an increased risk of dirt accumulating on the separation surfaces after a long running times of the separator. The throttle members of the present invention, causing a pressure drop in each interspace between at least the majority of separation discs, are thought to give a more even flow distribution within the compressed disc stack.

Consequently, each of the majority of disc may thus have a throttle member, which is other than a distance member, attached to a separation surface for inducing a pressure drop of the liquid mixture that is separated in the centrifugal separator.

The centrifugal separator is for separation of a liquid feed mixture. The liquid feed mixture may be an aqueous liquid or an oily liquid. As an example, the centrifugal separator may be for separating at least one liquid phase, such as one or two liquid phases, and a solids phase from a liquid feed mixture. The solids phase may be a sludge phase. The liquid mixture may for example be a dairy mixture, such as milk that is separated into a skim milk phase and a cream phase.

The frame of the centrifugal separator is a non-rotating part, and the rotating part may be supported by the frame by at least one bearing device, which may comprise a ball bearing. The rotating part of the separator may be arranged to be rotated around vertical axis of rotation, i.e. the axis of rotation (X) may extend vertically. The rotating part comprises a centrifuge bowl. The centrifuge bowl is usually supported by a spindle, i.e. a rotating shaft, and may thus be mounted to rotate with the spindle. Consequently, the rotating part may comprise a spindle that is rotatable around the axis of rotation (X). The centrifugal separator may be arranged such that the centrifuge bowl is supported by the spindle at one of its ends, such at the bottom end or the top end of the spindle.

The drive member for rotating the rotating part of the separator may comprise an electrical motor having a rotor and a stator. The rotor may be fixedly connected to the rotating part, such as to a spindle. Advantageously, the rotor of the electrical motor may be provided on or fixed to the spindle of the rotating part. Alternatively, the drive member may be provided beside the spindle and rotate the rotating part by a suitable transmission, such as a belt or a gear transmission.

The centrifuge bowl encloses by rotor walls a separation space. The separation space, in which the separation of the fluid mixture takes place, comprises a stack of separation discs. The separation discs may e.g. be of metal. Further, the separation discs may be frustoconical separation discs, i.e. having separation surfaces forming frustoconical portions of the separation discs. The angle of inclination of the separation surface may be within the range of 30-50 degrees to the axis of rotation (X). Radially outside of the stack of separation discs is the sludge space, in which separated sludge and liquid heavy phase may be collected during operation.

The separation discs are arranged coaxially around the axis of rotation (X) at a distance from each other such that to form interspaces between each two adjacent separation discs due to the distance members. The distance members may have any suitable form and may be attached to the inner or outer separation surface of the separation disc. The distance members may also be integrally formed with the disc.

As used herein, the term "axially" denotes a direction which is parallel to the rotational axis (X). Accordingly, relative terms such as "above", "upper", "top", "below", "lower", and "bottom" refer to relative positions along the rotational axis (X). Correspondingly, the term "radially" denotes a direction extending radially from the rotational axis (X). A "radially inner position" thus refers to a position closer to the rotational axis (X) compared to "a radially outer position".

The centrifugal separator also comprises an inlet for receiving the liquid mixture to be separated (the liquid feed mixture). This inlet may be arranged centrally in the centrifuge bowl, thus at rotational axis (X). The centrifugal separator may be arranged to be fed from the bottom, such as through a spindle, so that the liquid feed mixture is delivered to the inlet from the bottom of the separator. Alternatively, the centrifugal separator may be arranged to be fed from the top, such as through a stationary inlet pipe extending into the centrifuge bowl.

The at least one liquid outlet may be arranged on an upper portion of the centrifuge bowl, such as axially above the stack of separation discs. The at least one liquid outlet may be a single outlet for a separated liquid phase or comprise a first liquid outlet for a liquid light phase and a second liquid outlet for a liquid heavy phase.

A liquid heavy phase is the liquid discharged via the liquid heavy phase outlet during operation and the liquid light phase is the liquid discharged via the liquid light phase outlet during operation. The liquid heavy phase has thus a density that is higher than the density of the liquid light phase.

In embodiments of the first aspect, the throttle member is arranged on a separation surface of the separation discs, and wherein the height of the throttle member from the separation surface is less than the height of the distance members.

The separation disc may thus comprise separation surfaces, onto which separation takes place, but also other surfaces such as surface used for guiding the disc onto e.g. a distributor. On a frustoconical separation disc, the conical surfaces forming an angle with the axis of rotation (X) are separation surfaces. Thus, the throttle member may be realised as an extending part on the separation surfaces of the separation discs.

In embodiments, the throttle member is only arranged on only one of the inner or outer separation surface of the separation disc. However, as an alternative, the throttle member may be provided on both the inner and outer separation surface of the separation disc.

According to the first aspect of the invention throttle member extends on the separation surface of the separation discs a full turn around the axis of rotation (X).

The throttle member may extend around the whole circumference at any radial position of a separation disc. The throttle member may thus be a circumferential throttle member. This may aid in improving the distribution of liquid in the disc stack, since there are no "gaps" in the throttle member in the liquid path between the separation discs.

As a further example, the throttle member may extend on the separation surface of the separation discs at least half a turn around the axis of rotation (X).

In embodiments of the first aspect, each separation disc of the stack has an outer and inner separation surface, and the throttle member is arranged on the inner separation surface.

In embodiments of the first aspect, the throttle member is a ridge extending from a separation surface of the separation disc.

The ridge may extend from a separation surface at any radial position. The ridge may extend across the surface of a separation disc a full turn around the axis of rotation (X). The ridge may extend from the inner or the outer surface of the separation disc. A ridge extending from the surface may be a preferred way of manufacturing a separation disc with a throttle member.

As an example, the throttle member may be a ridge extending from the inner surface of the separation discs a full turn around the axis of rotation (X) and have a height that is less than the height of the distance members.

As an example, the stack of separation discs may comprise more than 100 separation discs, such as more than 200 separation discs. The thickness of a separation disc may be less than 1 mm, such as less than 0.6 mm.

The distance members may be traditional elongated caulks extending in the radial direction. Such caulks may be straight or curved. A separation disc may for example comprise 4-12 caulks. The distance members may also be spot formed. The spot formed distance members may be integrally formed in the surface of the disc, as explained in e.g. WO2013020978. The spot formed distance members may extend to width of less 5 mm, such as less than 3 mm, on any direction on the surface of a separation disc. A separation disc may comprise more than 100 spot formed distance members, such as more than 1000 spot-formed distance members. The spot-formed distance members may be distributed on the surface of the separation disc at a mutual distance which is less than 20 mm.

The interspaces between the separation discs in the disc stack may thus correspond to the height of a distance member from the separation surface.

Accordingly, in embodiments of the first aspect, the distance members are spot formed.

In embodiments of the first aspect, the throttle member is arranged radially inside said distance members. This has been shown to give rise to a pressure drop that provides an even flow distribution in the disc stack.

However, the throttle member may be arranged on any radial position of the separation disc, such as radially outside all of the distance members or at a position that is within the radial extension of the distance members.

In embodiments of the first aspect, the throttle member is formed as an integral part of the inner or outer separation surface of the separation disc. This allows for providing the throttle member when forming the separation disc from a blank in a forming method, such as when flow forming the separation disc from a metal sheet by means of a roller and a mandrel in which the roller forming the separation disc over the mandrel. In such a process, also the distance members may be formed, i.e. the mandrel may comprise a truncated conical support surface with recesses corresponding to the distance members. Alternatively, the throttle member may be attached to the surface e.g. by means of welding or using an additive manufacturing method, such as 3D-printing.

Consequently, in embodiments, the throttle members are arranged on the same side of the separation discs as the distance members. This may be an advantage since the throttle member may be formed as an integral part of the separation disc in the same process as when forming distance members as integral members of the separation disc, as discussed above.

In embodiments of the first aspect, the throttle member comprises a plurality of individual throttle portions, such as a plurality of individual elevations in the separation surface. These elevations may be arranged on the same radial distance and be distributed a full turn around the axis of rotation (X). The plurality of individual throttle portions may have the same height from the separation surface as the distance members but may be arranged with a mutual distance that is less than the mutual distance between the distance members.

Thus, in embodiments, the throttle member comprises a plurality of individual throttle portions having the same height from the separation surface as the distance members but arranged with a mutual distance that is less than the mutual distance between the distance members.

The plurality of individual throttle portions may be arranged in a circle around the axis of rotation (X). Thus, the plurality of individual throttle members may be distributed on an imaginary circle around the axis of rotation (X) with a mutual distance that is less than the mutual distance between the distance members.

The plurality of individual throttle portions may be formed from a ridge having the same height as the distance members into which individual tracks have been milled or cut.

The plurality of individual throttle portions may be arranged radially inside all of the distance members

The liquid feed mixture may be separated into at least two liquid phases; a liquid light phase and a liquid heavy phase. Consequently, in embodiments of the first aspect, the at least one liquid outlet for a separated liquid phase comprises a first liquid outlet for the liquid heavy phase and a second liquid outlet for the liquid light phase.

In embodiments of the first aspect, the centrifugal separator further comprises a sludge outlet arranged at the periphery of the centrifuge bowl.

As an example, the sludge outlet may be in the form of a set of intermittently openable outlets.

The centrifuge bowl may therefore centrifuge comprise at its outer periphery a set of radially sludge outlets in the form of intermittently openable outlets. The intermittently openable outlets may be equidistantly spaced around the axis of rotation (X).

In embodiments of the first aspect, the at least one liquid outlet for a separated liquid phase comprises a first liquid outlet for the liquid heavy phase and a second liquid outlet for the liquid light phase.

The liquid heavy phase has a density that is higher than the density of the light phase. The centrifugal separator may thus be arranged to separate the liquid feed mixture into a liquid light phase, a liquid heavy phase and a solids phase, i.e. a sludge phase, and hence, the centrifugal separator may comprise a first liquid outlet for a heavy phase, a second liquid outlet for a light phase and sludge outlets for separated sludge.

As a second aspect of the invention, there is provided a method of separating at least one liquid phase from a liquid feed mixture, comprising the steps of
a) introducing the liquid feed mixture into a centrifugal separator according to the first aspect; and
b) discharging at least one separated liquid phase from said centrifugal separator.

As an example, at least one separated liquid phase may be a liquid light phase and a liquid heavy phase.

This aspect may generally present the same or corresponding advantages as the former aspect. Effects and features of this second aspect are largely analogous to those described above in connection with the first aspect. Embodiments mentioned in relation to the first aspect are largely compatible with the second aspect.

In embodiments of the second aspect, step b) further comprises intermittently ejecting a separated solids phase through a set of intermittently openable outlets.

The centrifugal separator is especially suitable for applications in which the hygienic requirements is high, since it has been found that the use of a throttling member reduces the risk of dirt sticking to the separation surfaces. One such application is dairy, which for example includes the separation of milk.

Thus, in embodiments of the second aspect, the liquid feed mixture is a dairy mixture and the at least one separated liquid phase comprise a separated cream phase and a separated skim milk phase

### Brief description of the Drawings

The above, as well as additional objects, features and advantages of the present inventive concept, will be better understood through the following illustrative and non-limiting detailed description, with reference to the appended drawings. In the drawings like reference numerals will be used for like elements unless stated otherwise.
Figure 1 shows a schematic drawing of a centrifugal separator according to an embodiment of the present invention.
Figure 2 shows a schematic drawing of a cross-section of a centrifuge bowl.
Figure 3 shows a perspective view of a separation disc.
Figure 4 shows a cross-section of the upper portion of the separation disc of Fig. 3.
Figure 5 shows a bottom view of the separation disc of Fig. 3.
Figure 6 shows a perspective view and a bottom view of an embodiment of a separation disc.
Figure 7 shows a perspective view and a top view of an embodiment of a separation disc.
Figure 8 shows an enlarged view and a side view of a separation disc.
Figure 9 shows a flow chart of a method of separating a solids phase and at least one liquid phase from a liquid feed mixture.

### Detailed Description

The centrifugal separator and the method according to the present disclosure will be further illustrated by the following description with reference to the accompanying drawings.

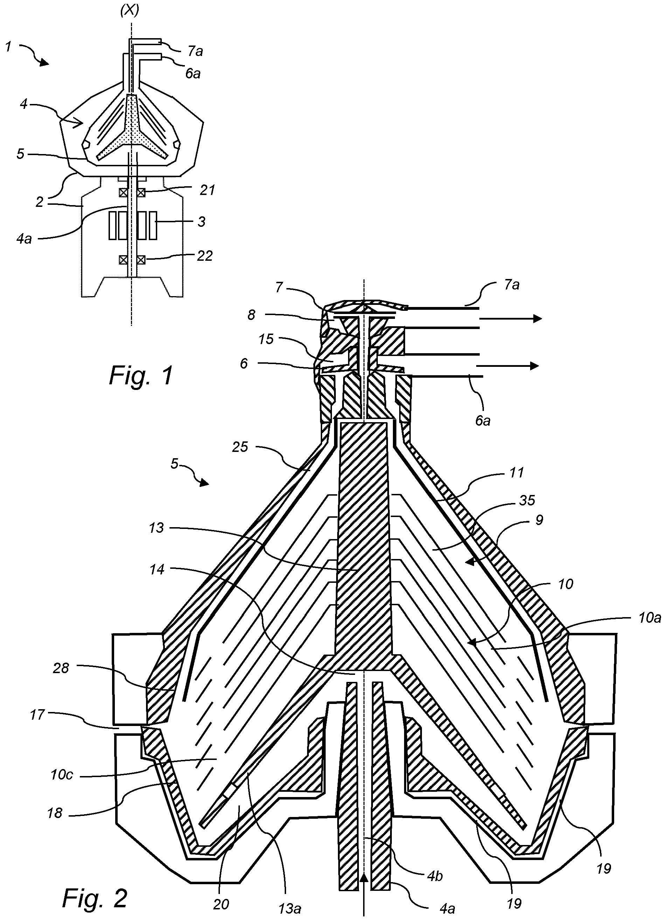

Fig. 1 show a cross-section of an embodiment of a centrifugal separator 1 configured to separate at least one liquid phase from a liquid feed mixture - in this case a liquid heavy phase and a liquid light phase - from a liquid feed mixture. The centrifugal separator 1 has a rotating part 4, comprising the centrifuge bowl 5 and drive spindle 4a.

The centrifugal separator 1 is further provided with a drive motor 3. This motor 3 may for example comprise a stationary element and a rotatable element, which rotatable element surrounds and is connected to the spindle 4a such that it transmits driving torque to the spindle 4a and hence to the centrifuge bowl 5 during operation. The drive motor 3 may be an electric motor. Alternatively, the drive motor 3 may be connected to the spindle 4a by transmission means. The transmission means may be in the form of a worm gear comprising an element connected to the spindle 4a in order to receive driving torque. The transmission means may alternatively take the form of drive belts or the like.

The centrifuge bowl 5, shown in more detail in Fig. 2, is supported by the spindle 4a, which in turn is rotatably arranged in a frame 2 around the vertical axis of rotation (X) in a bottom bearing 22 and a top bearing 21. The stationary frame 2 surrounds centrifuge bowl 5. The drive motor is thus configured to rotate the rotating part 4 in relation to the frame around a vertical axis of rotation (X).

In the centrifugal separator as shown in Fig. 1, liquid feed to be separated is fed from the bottom to the centrifuge bowl 5 via the drive spindle 4a. The drive spindle 4a is thus in this embodiment a hollow spindle, through which the feed is supplied to the centrifuge bowl 5. However, in other embodiments, the liquid feed mixture to be separated may be supplied from the top, such as through a stationary inlet pipe extending into the centrifuge bowl 5.

After separation has taken place within the centrifuge bowl 5, separated liquid heavy phase is discharged through stationary outlet pipe 6a, whereas separated liquid light phase is discharged through stationary outlet pipe 7a.

Fig. 2. shows a more detailed view of the centrifuge bowl 5 of the centrifugal separator 1.

The centrifuge bowl 5 forms within itself, i.e. encloses, a separation space 9. In the separation space 9, a stack 10 of separation discs 10a is arranged coaxially around the axis of rotation (X) and axially below a top disc 11. The stack 10 is thus arranged to rotate together with the centrifuge bowl 5. The separation discs 10a provide for an efficient separation of the liquid mixture into at least a liquid light phase and a liquid heavy phase. Thus, in the separation space 9 centrifugal separation of e.g. a liquid feed mixture to takes place during operation.

The separation discs 10a in the stack 10 are separated by distance members 30. Such members are arranged on the conical portions of the separation discs and are arranged so that interspaces are 35 formed between adjacent separation discs 10a in the disc stack 10.

The stack 10 is supported at its axially lowermost portion by distributor 13. The distributor 13 comprises a base portion 13a and a central neck portion extending upwards from the base portion 13a. The distributor 13 is arranged to conduct liquid mixture from a center inlet 14 of the centrifuge bowl 5 to a radial level in the separation space 9.

The centrifuge bowl 5 further comprises an inlet 14 in the form of a central inlet chamber formed within or under the distributor 13. The inlet is arranged for receiving the liquid feed mixture and is thus in fluid communication with the hollow interior 4b of the spindle 4a, through which the liquid feed is supplied to the centrifuge bowl 5.

The inlet 14 communicates with the separation space 9 via passages 20 formed in or under the base portion 13a of the distributor 13.

The passages 20 may be arranged so that liquid mixture is transported to a radial level that corresponds to the radial level of the cut-outs 10c provided in the separation discs 10a. The cut-outs 10c form axial channels within the disc stack and distributes the liquid feed mixture throughout the disc stack 10.

The top disc 11 and an upper inner wall of the centrifuge bowl 5 delimits at least one channel 25 extending from the radially outer portion of the separation space 9 towards a central portion of the centrifuge bowl 5. The first liquid outlet 6 is arranged in a first outlet chamber 15, which is in fluid communication with the at least one channel 25 for discharge of a separated liquid heavy phase.

The radially inner portion of the disc stack 10 communicates with a second outlet 7 for a separated light phase of the liquid feed mixture. The second outlet 7 is arranged in a second outlet chamber 8.

The centrifuge bowl 5 is further provided with outlets 17 at the radially outer periphery of the separation space 9. These outlets 17 are evenly distributed around the axis of rotation (X) and are arranged for intermittent discharge of a sludge component of the liquid feed mixture. The sludge component comprises denser particles forming a sludge phase. The opening of the outlets 17 is controlled by means of an operating slide 18 actuated by operating water in channel 19, as known in the art. In its position shown in the drawing, the operating slide 18 abuts sealingly at its periphery against the upper part of the centrifuge bowl 5, thereby closing the separation space 9 from connection with outlets 17, which are extending through the centrifuge bowl 5.

During operation of the separator as shown in Fig. 1 and 2, the centrifuge bowl 5 is brought into rotation by the drive motor 3. Via the spindle 4a, liquid feed mixture to be separated is brought into the separation space 9. Depending on the density, different phases in the liquid feed mixture is separated between the separation discs 10a of the stack 10. Heavier component, such as a liquid heavy phase and a sludge phase, move radially outwards between the separation discs 10a to the radially outer portion of the separation space 9, whereas the phase of lowest density, such as a liquid light phase, moves radially inwards between the separation discs 10a and is forced through second outlet 7 arranged in the second liquid outlet chamber 8. The liquid of higher density is instead forced out through the passages 25 over the top disc 11 to the liquid outlet 6 for the liquid heavy phase. Thus, during separation, an interphase between the liquid of lower density and the liquid of higher density is formed in the centrifuge bowl 5, such as radially within the stack of separation discs. Solids, or sludge, accumulate at the periphery of the separation space and is emptied intermittently from within the centrifuge bowl by the sludge outlets 17 being opened, whereupon sludge and a certain amount of fluid is discharged from the separation chamber 17 by means of centrifugal force. However, the discharge of sludge may also take place continuously, in which case the sludge outlets 17 take the form of open nozzles and a certain flow of sludge and/or heavy phase is discharged continuously by means of centrifugal force.

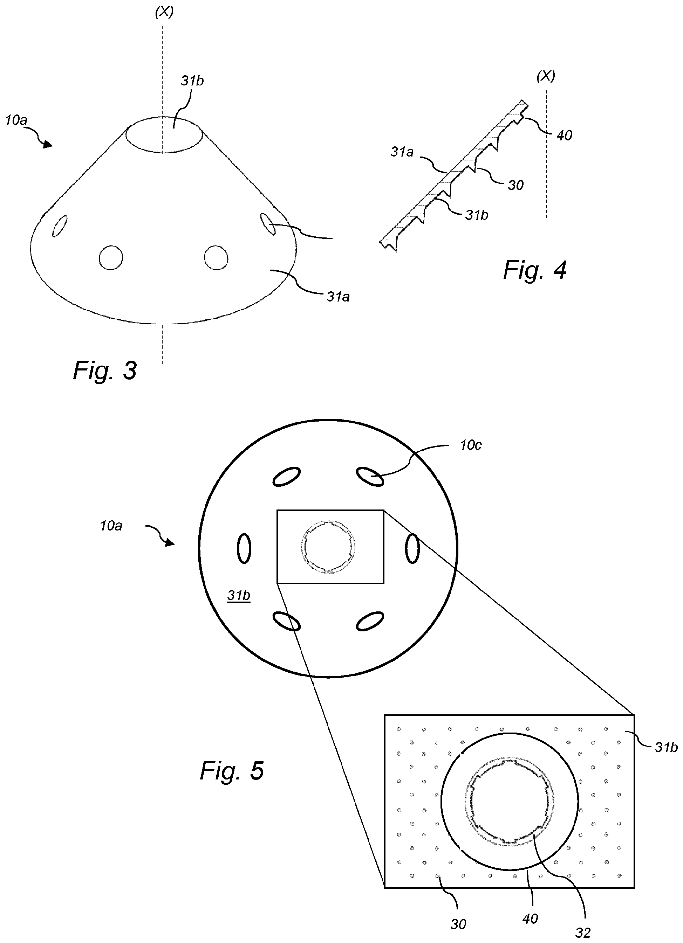

Figs. 3-5 show an example of a separation disc 10a of the present disclosure than can be used in the disc stack 10 in the centrifugal separator 1 as described in relation to Figs. 1 and 2 above. The separation disc 10a is in this example a frustoconical separation disc. The disc 10a has an outer separation surface 31 and an opposite inner surface 31b. When arranged in the stack 10 in the centrifugal separator 1, the outer surface 31a forms the upper surface of the disc 10a, whereas the inner surface 31b forms the lower surface. There are also a number of cut outs 10c in the stack 10 arranged for forming part of axial distribution channels in the stack. Such cut outs 10c may also be provided at the outer periphery of the separation disc 10a, depending on the intended use of the centrifugal separator 1. As seen in Figs. 4 and 5, the separation disc 10a comprises a throttle member 40 arranged on the inner separation surface 31b of the separation disc. This throttle member 40 is arranged to cause a decrease in pressure to a liquid flowing through the disc stack 10 in the interspaces 35 formed between the discs.

The throttle member 40 is in this case formed as a ridge extending from the inner surface 31b of the separation disc 10a. The ridge extends full turn around the axis of rotation (X) and is arranged radially inside the distance members 30.

As seen in the enlarged view of the center portion of the separation disc 10a in Fig. 5, the disc 10a also comprises an inner radial surface 32 extending from the frustoconical portion. This radial surface 32 may have cut outs that fits the central neck portion of the distributor 13 and may thus be used for aligning the separation disc 10a onto the distributor 13. The inner 31b and outer 31a surfaces of the separation disc 10a thus form separation surfaces of the separation disc 10a, whereas the radial inner surface 32 function as a guiding surface for aligning the disc 10a onto the distributor 13. However, in some embodiments, the separation disc 10a is free from any radial inner surface 32

As illustrated in Fig. 4, the height of the throttle member 40 from the inner surface 31b is less than the height of the distance members 30. Thus, the throttle member 40 is not used for providing the interspaces and are consequently separate members from the distance members 30. The throttle members 40 may be formed as an integral part of the inner separation surface 31b.

The distance members 30 are in this example formed as small spots extending from the inner surface 31b of the separation disc 10a. The outer surface 31a is thus free from both distance members 30 and throttle members 40. The spot-formed distance members 30 may be as shown in WO 2018/077919.

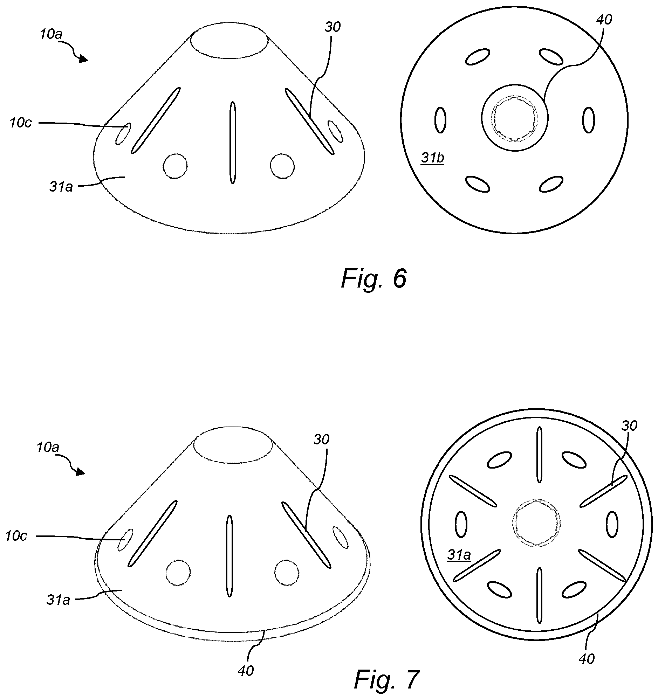

In the embodiment shown in Figs. 3-5, the distance members 30 and the throttle members 40 are arranged on the same separation surface of the separation disc. However, the throttle members 40 may be arranged on the opposite surface than the distance members. Such an example is illustrated in Fig 6, in which the distance members, formed as caulks elongated in the radial direction, are arranged on the upper separation surface 31a, whereas the throttle member is formed on the inner surface 31b. The separation disc 10a may e.g. comprise between 4-12 of such distance members formed as elongated caulks, as known in the art. The elongated caulks may for example be attached to the outer separation surface 31a by means of welding. Also in this example, the throttle member 40 is arranged radially inside the distance members 30, but hence on the opposite separation surface.

Moreover, the throttle member 40 may also be arranged on the outer surface 31a of the separation disc 10a, as illustrated in Fig. 7. In this embodiment, the distance members are in the form of elongated radial caulks on the outer surface 31a of the separation disc 10a, as in the example discussed in relation to Fig. 6. However, in this example, the throttle member 40, formed as a circumferential ridge extending from the outer surface 31a, is arranged radially outside the distance members 40 on the outer surface 31a.

It is also to be understood that the separation disc 10a may be free from any cut-outs 10c. This may depend on the intended application of the centrifugal separator.

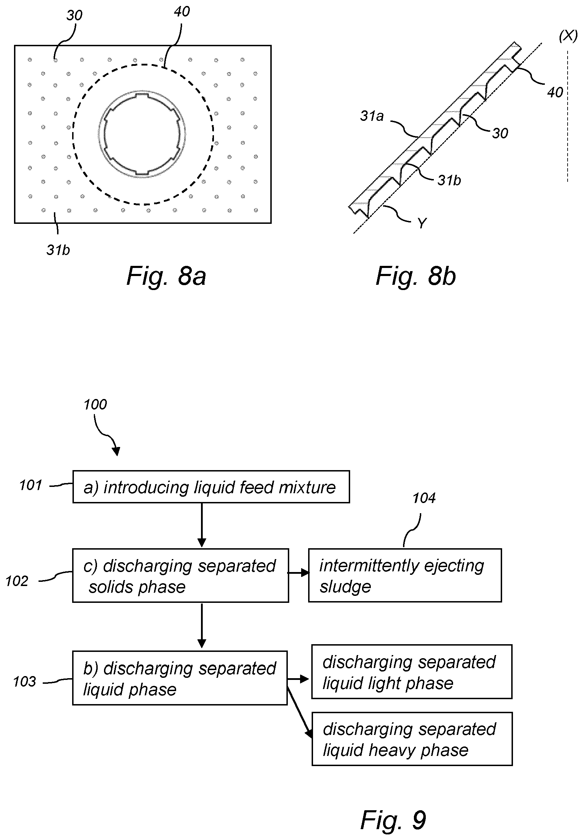

The throttle member 40 may also take the form as a plurality of individual throttle portions. This is further illustrated in Figs. 8a and 8b, in which Fig. 8a corresponds to the enlarged view in Fig. 5 and Fig. 8b corresponds to the side view of Fig. 4. As seen in Fig. 8a, the throttle member 40 is in the form of a plurality of individual portions arranged on an imaginary circle on the inner side 31b of the separation disc at a position that is radially inside the spot-formed distance members 30. Thus, small channels are formed in between the individual throttle portions 40. In this example, the throttle member may have the same height from the separation surface as the distance members 30, as illustrated by line "Y" in Fig. 8b, since liquid may flow in the channels formed between the individual throttle portions. The mutual distance between the individual throttle portions 40 is however smaller than the mutual distance between the spot-formed distance members 30.

Fig. 9 illustrates a method 100 of separating a solids phase and at least one liquid phase from a liquid feed mixture. The method 100 comprises the steps of
a) introducing 101 the liquid feed mixture into a centrifugal separator 1. This separator may thus be a centrifugal separator as disclosed herein above, such as the centrifugal separator 1 discussed in relation to Figs. 1-8.

The method 100 further comprises a step b) of discharging 103 at least one separated liquid phase from the centrifugal separator 1 and a step c) of discharging 102 a separated solids phase from the centrifugal separator.

As illustrated in the flow chart of Fig.9, step c) may comprise intermittently ejecting 104 the separated solids phase through a set of intermittently openable outlets. Further, the at least one separated liquid phase may be a liquid light phase and a liquid heavy phase. Thus, the method 100 may comprise the steps of discharging a liquid heavy phase and discharging a liquid light phase.

The liquid feed mixture may for example be a dairy mixture such as milk. The separated liquid phases may thus be a separated cream phase and a separated skim milk phase. However, the method may also be used in a variety of other applications, such as for beverages and in the pharma industry.

The invention is not limited to the embodiments disclosed but may be varied and modified within the scope of the claims set out below. The invention is not limited to the orientation of the axis of rotation (X) disclosed in the figures. The term "centrifugal separator" also comprises centrifugal separators with a substantially horizontally oriented axis of rotation. In the above the inventive concept has mainly been described with reference to a limited number of examples. However, as is readily appreciated by a person skilled in the art, other examples than the ones disclosed above are equally possible within the scope of the inventive concept, as defined by the appended claims.

## Claims

1. A centrifugal separator (1) for separating at least one liquid phase from a liquid feed mixture, comprising
a frame (2), a drive member (3) and a rotating part (4),
wherein the drive member (3) is configured to rotate the rotating part (4) in relation to the frame (2) around an axis of rotation (X), and
wherein the rotating part (4) comprises a centrifuge bowl (5) enclosing a separation space (9);
wherein the centrifuge bowl (5) further comprises an inlet (14) for receiving the liquid feed mixture, at least one liquid outlet (6,7) for a separated liquid phase;
wherein the separation space (9) comprises a stack (10) of separation discs (10a) arranged coaxially around the axis of rotation (X);
wherein said separation discs (10a) comprise distance members (30) arranged so that interspaces are (35) formed between adjacent separation discs (10a) in the disc stack (10), and further wherein
a plurality of said separation discs (10a) comprise a throttle member (40) other than said distance members (30) and arranged to cause a decrease in pressure to a liquid flowing through the disc stack (10) in said interspaces (35),
**characterised in that** said throttle member (40) extends on the separation surface (31) of the separation discs a full turn around the axis of rotation (X).

2. A centrifugal separator (1) according to claim 1, wherein said throttle member (40) is arranged on a separation surface (31) of the separation discs (10a), and wherein the height of the throttle member (40) from said separation surface (31) is less than the height of the distance members (30).

3. A centrifugal separator (1) according to any previous claim, wherein the throttle member (40) is a ridge extending from a separation surface (31) of the separation disc (10a).

4. A centrifugal separator (1) according to any previous claim, wherein each separation disc (10a) of the stack (10) has an outer (31a) and inner (31b) separation surface, and wherein the throttle member (40) is arranged on the inner separation surface (31b).

5. A centrifugal separator (1) according to any previous claim, wherein said throttle member (40) is arranged radially inside said distance members (30).

6. A centrifugal separator (1) according to any previous claim, wherein the throttle member (40) is formed as an integral part of the inner (31b) or outer (31a) separation surface of the separation disc (10a).

7. A centrifugal separator (1) according to any previous claim, wherein said throttle members (40) are arranged on the same side of the separation discs (10a) as the distance members (30).

8. A centrifugal separator (1) according to any previous claim, wherein the distance members (30) are spot formed.

9. A centrifugal separator (1) according to any previous claim, wherein the throttle member (40) comprises a plurality of individual throttle portions (30) having the same height from the separation surface as the distance members (30) but arranged with a mutual distance that is less than the mutual distance between the distance members (30).

10. A centrifugal separator (1) according to any previous claim, wherein the centrifugal separator further comprises a sludge outlet (17) arranged at the periphery of the centrifuge bowl (5).

11. A centrifugal separator (1) according to any previous claim, wherein the at least one liquid outlet (6, 7) for a separated liquid phase comprises a first liquid outlet (6) for the liquid heavy phase and a second liquid outlet (7) for the liquid light phase.

12. A method (100) of separating at least one liquid phase from a liquid feed mixture, comprising the steps of
a) introducing (101) the liquid feed mixture into a centrifugal separator (1) according to any one of claims 1-11; and
b) discharging (103) at least one separated liquid phase from said centrifugal separator (1).

13. A method (100) according to claim 12, wherein step b) further comprises intermittently ejecting (104) a separated solids phase through a set of intermittently openable outlets.

14. A method (100) according to any one of claims 12-13, wherein the liquid feed mixture is a dairy mixture and wherein the at least one separated liquid phase comprise a separated cream phase and a separated skim milk phase.

## Patentansprüche

1. Zentrifugalabscheider (1) zum Abtrennen mindestens einer flüssigen Phase aus einer flüssigen Zufuhrmischung, umfassend
einen Rahmen (2), ein Antriebselement (3) und ein Drehteil (4),
wobei das Antriebselement (3) so konfiguriert ist, dass es das Drehteil (4) in Bezug auf den Rahmen (2) um eine Drehachse (X) dreht, und
wobei das Drehteil (4) eine Zentrifugentrommel (5) umfasst, die einen Trennraum (9) umschließt;
wobei die Zentrifugentrommel (5) ferner einen Einlass (14) zum Aufnehmen der flüssigen Zufuhrmischung, mindestens einen Flüssigkeitsauslass (6, 7) für eine abgetrennte flüssige Phase umfasst;
wobei der Trennraum (9) einen Stapel (10) von Trennscheiben (10a) umfasst, die koaxial um die Drehachse (X) angeordnet sind;
wobei die Trennscheiben (10a) Abstandshalter (30) umfassen, die so angeordnet sind, dass Zwischenräume (35) zwischen benachbarten Trennscheiben (10a) im Scheibenstapel (10) gebildet werden, und wobei
eine Vielzahl der Trennscheiben (10a) außer den Abstandshaltern (30) ein Drosselelement (40) umfasst, das so angeordnet ist, dass es eine Verringerung des Drucks einer durch den Scheibenstapel (10) in den Zwischenräumen (35) strömenden Flüssigkeit bewirkt,
**dadurch gekennzeichnet, dass** sich das Drosselelement (40) auf der Trennfläche (31) der Trennscheiben um eine volle Umdrehung um die Drehachse (X) erstreckt.

2. Zentrifugalabscheider (1) nach Anspruch 1, wobei das Drosselelement (40) auf einer Trennfläche (31) der Trennscheiben (10a) angeordnet ist und wobei die Höhe des Drosselelements (40) von der Trennfläche (31) kleiner ist als die Höhe der Abstandshalter (30).

3. Zentrifugalabscheider (1) nach einem vorstehenden Anspruch, wobei das Drosselelement (40) ein Steg ist, der sich von einer Trennfläche (31) der Trennscheibe (10a) erstreckt.

4. Zentrifugalabscheider (1) nach einem vorstehenden Anspruch, wobei jede Trennscheibe (10a) des Stapels (10) eine äußere (31a) und eine innere (31b) Trennfläche aufweist und wobei das Drosselelement (40) auf der inneren Trennfläche (31b) angeordnet ist.

5. Zentrifugalabscheider (1) nach einem vorstehenden Anspruch, wobei das Drosselelement (40) radial innerhalb der Abstandshalter (30) angeordnet ist.

6. Zentrifugalabscheider (1) nach einem vorstehenden Anspruch, wobei das Drosselelement (40) als integraler Bestandteil der inneren (31b) oder äußeren (31a) Trennfläche der Trennscheibe (10a) ausgebildet ist.

7. Zentrifugalabscheider (1) nach einem vorstehenden Anspruch, wobei die Drosselelemente (40) auf derselben Seite der Trennscheiben (10a) angeordnet sind wie die Abstandshalter (30).

8. Zentrifugalabscheider (1) nach einem vorstehenden Anspruch, wobei die Abstandshalter (30) punktförmig ausgebildet sind.

9. Zentrifugalabscheider (1) nach einem vorstehenden Anspruch, wobei das Drosselelement (40) eine Vielzahl einzelner Drosselabschnitte (30) umfasst, die die gleiche Höhe von der Trennfläche aufweisen wie die Abstandshalter (30), jedoch mit einem gegenseitigen Abstand angeordnet sind, der kleiner ist als der gegenseitige Abstand zwischen den Abstandshaltern (30).

10. Zentrifugalabscheider (1) nach einem vorstehenden Anspruch, wobei der Zentrifugalabscheider weiter einen Schlammauslass (17) umfasst, der am Umfang der Zentrifugentrommel (5) angeordnet ist.

11. Zentrifugalabscheider (1) nach einem vorstehenden Anspruch, wobei der mindestens eine Flüssigkeitsauslass (6, 7) für eine abgetrennte flüssige Phase einen ersten Flüssigkeitsauslass (6) für die schwere flüssige Phase und einen zweiten Flüssigkeitsauslass (7) für die leichte flüssige Phase umfasst.

12. Verfahren (100) zum Abtrennen mindestens einer flüssigen Phase aus einer flüssigen Zufuhrmischung, die folgenden Schritte umfassend
a) Einführen (101) der flüssigen Zufuhrmischung in einen Zentrifugalabscheider (1) nach einem der Ansprüche 1 bis 11; und
b) Ablassen (103) mindestens einer abgetrennten flüssigen Phase aus dem Zentrifugalabscheider (1).

13. Verfahren (100) nach Anspruch 12, wobei Schritt b) weiter das intermittierende Ausstoßen (104) einer abgetrennten Feststoffphase durch eine Reihe von intermittierend zu öffnenden Auslässen umfasst.

14. Verfahren (100) nach einem der Ansprüche 12-13, wobei es sich bei der flüssigen Zufuhrmischung um eine Milchmischung handelt und wobei die mindestens eine abgetrennte flüssige Phase eine abgetrennte Rahmphase und eine abgetrennte Magermilchphase umfasst.

## Revendications

1. Séparateur centrifuge (1) destiné à séparer au moins une phase liquide d'un mélange d'alimentation liquide, comprenant
un cadre (2), un élément d'entraînement (3) et une pièce rotative (4),
dans lequel l'élément d'entraînement (3) est configuré pour faire tourner la partie rotative (4) par rapport au cadre (2) autour d'un axe de rotation (X), et
dans lequel la partie rotative (4) comprend un bol de centrifugeuse (5) renfermant un espace de séparation (9) ;
dans lequel le bol de centrifugeuse (5) comprend en outre une entrée (14) destinée à recevoir le mélange d'alimentation liquide, au moins une sortie de liquide (6, 7) destinée à une phase liquide séparée ;
dans lequel l'espace de séparation (9) comprend un empilement (10) de disques de séparation (10a) disposés coaxialement autour de l'axe de rotation (X) ;
dans lequel lesdits disques de séparation (10a) comprennent des éléments de distance (30) disposés de manière à former des espaces intermédiaires (35) entre les disques de séparation adjacents (10a) dans l'empilement de disques (10), et en outre dans lequel
une pluralité de dits disques de séparation (10a) comprennent un élément d'étranglement (40) autre que lesdits éléments de distance (30) et agencés pour provoquer une diminution de la pression d'un liquide s'écoulant à travers l'empilement de disques (10) dans lesdits espaces intermédiaires (35),
**caractérisé en ce que** ledit élément d'étranglement (40) s'étend sur la surface de séparation (31) des disques de séparation sur un tour complet autour de l'axe de rotation (X).

2. Séparateur centrifuge (1) selon la revendication 1, dans lequel ledit élément d'étranglement (40) est disposé sur une surface de séparation (31) des disques de séparation (10a), et dans lequel la hauteur de l'élément d'étranglement (40) par rapport à ladite surface de séparation (31) est inférieure à la hauteur des éléments de distance (30).

3. Séparateur centrifuge (1) selon une quelconque revendication précédente, dans lequel l'élément d'étranglement (40) est une arête s'étendant à partir d'une surface de séparation (31) du disque de séparation (10a).

4. Séparateur centrifuge (1) selon une quelconque revendication précédente, dans lequel chaque disque de séparation (10a) de l'empilement (10) présente une surface de séparation extérieure (31a) et intérieure (31b), et dans lequel l'élément d'étranglement (40) est disposé sur la surface de séparation intérieure (31b).

5. Séparateur centrifuge (1) selon une quelconque revendication précédente, dans lequel ledit élément d'étranglement (40) est disposé radialement à l'intérieur desdits éléments de distance (30).

6. Séparateur centrifuge (1) selon une quelconque revendication précédente, dans lequel l'élément d'étranglement (40) est formé comme partie intégrante de la surface de séparation intérieure (31b) ou extérieure (31a) du disque de séparation (10a).

7. Séparateur centrifuge (1) selon une quelconque revendication précédente, dans lequel lesdits éléments d'étranglement (40) sont disposés du même côté des disques de séparation (10a) que les éléments de distance (30).

8. Séparateur centrifuge (1) selon une quelconque revendication précédente, dans lequel les éléments de distance (30) sont formés par points.

9. Séparateur centrifuge (1) selon une quelconque revendication précédente, dans lequel l'élément d'étranglement (40) comprend une pluralité de parties d'étranglement individuelles (30) présentant la même hauteur par rapport à la surface de séparation que les éléments de distance (30) mais disposées à une distance mutuelle inférieure à la distance mutuelle entre les éléments de distance (30).

10. Séparateur centrifuge (1) selon une quelconque revendication précédente, dans lequel le séparateur centrifuge comprend en outre une sortie de boues (17) disposée à la périphérie du bol de centrifugeuse (5).

11. Séparateur centrifuge (1) selon une quelconque revendication précédente, dans lequel l'au moins une sortie de liquide (6, 7) pour une phase liquide séparée comprend une première sortie de liquide (6) pour la phase liquide lourde et une seconde sortie de liquide (7) pour la phase liquide légère.

12. Procédé (100) de séparation d'au moins une phase liquide d'un mélange d'alimentation liquide, comprenant les étapes de :
a) introduction (101) du mélange d'alimentation liquide dans un séparateur centrifuge (1) selon l'une quelconque des revendications 1 à 11 ; et
b) décharge (103) d'au moins une phase liquide séparée dudit séparateur centrifuge (1).

13. Procédé (100) selon la revendication 12, dans lequel l'étape b) comprend en outre l'éjection intermittente (104) d'une phase solide séparée à travers un ensemble de sorties pouvant être ouvertes de manière intermittente.

14. Procédé (100) selon l'une quelconque des revendications 12 à 13, dans lequel le mélange d'alimentation liquide est un mélange laitier et dans lequel au moins une phase liquide séparée comprend une phase de crème séparée et une phase de lait écrémé séparée.
